(19) Europäisches Patentamt
European Patent Office
Office européen des brevets

(11) EP 2 154 894 A1

(12) EUROPEAN PATENT APPLICATION

(43) Date of publication:
17.02.2010 Bulletin 2010/07

(51) Int Cl.:
H04N 7/26 (2006.01)   H04N 7/50 (2006.01)

(21) Application number: 08305483.3

(22) Date of filing: 15.08.2008

(84) Designated Contracting States:
AT BE BG CH CY CZ DE DK EE ES FI FR GB GR
HR HU IE IS IT LI LT LU LV MC MT NL NO PL PT
RO SE SI SK TR
Designated Extension States:
AL BA MK RS

(71) Applicant: Thomson Licensing
92443 Issy-les-Moulineaux Cedex (FR)

(72) Inventors:
• An, Jicheng
100085, Beijing (CN)

• Chen, Quqing
100085, Beijing (CN)
• Chen, Zhibo
100085, Beijing (CN)
• Teng, Jun
100085, Beijing (CN)

(74) Representative: Hartnack, Wolfgang
Deutsche Thomson OHG
European Patent Operations
Karl-Wiechert-Allee 74
30625 Hannover (DE)

(54) **Video coding with coding of the locations of significant coefficients in a block of coefficients**

(57)   In known image compression, following quantisation, a very sparse distribution of significant (i.e. non-zero) amplitude coefficients of the transformed image signal may be obtained while most quantised coefficients are zeros. A costly task for a transform-based image compression in terms of resulting overall data rate is to record the locations of such significant coefficients within the coding blocks. In quartation processing, a 'significant square' (containing at least one non-zero amplitude coefficient in the coefficient block) is recursively divided into four smaller squares until single significant coefficients are reached, and the significance statuses of all generated squares are encoded. However, for some distribution patterns encoding the x-y-coordinates of the significant coefficients as binary numbers will lead to less coding cost. According to the invention, at least four different pattern determination or encoding modes are checked, and the encoding side selects the least costly one of these modes and transfers the corresponding mode information to the decoding side for corresponding decoding.

Fig. 1

**Description**

The invention relates to a method and to an apparatus for encoding for video encoding, and for decoding for video decoding, the distribution of significant coefficients in a block of coefficients, wherein any non-zero amplitude coefficient is denoted a significant coefficient.

Background

In known image compression processing, e.g. MPEG2 and MPEG4 AVC, following quantisation, a very sparse distribution of significant (i.e. non-zero) amplitude coefficients of the (e.g. DCT-) transformed image signal may be obtained while most quantised coefficients are zeros. Although run-length coding for zeros can be used, the most costly task for a transform-based image compression in terms of resulting overall data rate is to record the locations of such significant coefficients within the coding blocks or macroblocks. Encoding the location of a significant coefficient within a block is more expensive than encoding its magnitude and sign, because of the sparse distribution of significant coefficients.

In existing codecs, for example JPEG2000, as described in D. Taubman, "High Performance Scalable Image Compression with EBCOT", IEEE Transactions on Image Processing, Vol.9, No.7, July 2000, pp.1158-1170, in the bit plane encoding process, coefficients are repeatedly scanned and encoded in a one-dimensional sample-by-sample pattern. Therefore a large number of zeros are to be encoded in order to record the locations of significant coefficients. Although run-length coding for zeros may be employed in the clean-up pass under some conditions, the chance for reducing redundant coding data information is relatively small.

Addressing this issue, in US2007/0071331A1 a quaternary reaching method is proposed which is essentially a quartation to reach the significant coefficients efficiently. In that quartation, a 'significant square' (i.e. containing at least one non-zero amplitude coefficient) with pixel size $2^N*2^N$ is recursively divided into four smaller squares by evenly dividing the height and width, until single significant coefficients are reached. Then, the significance statuses of all generated squares are encoded. The resulting total quantity of information needs to be recorded and encoded but the number of coding operations for reaching significant coefficients is reduced.

Invention

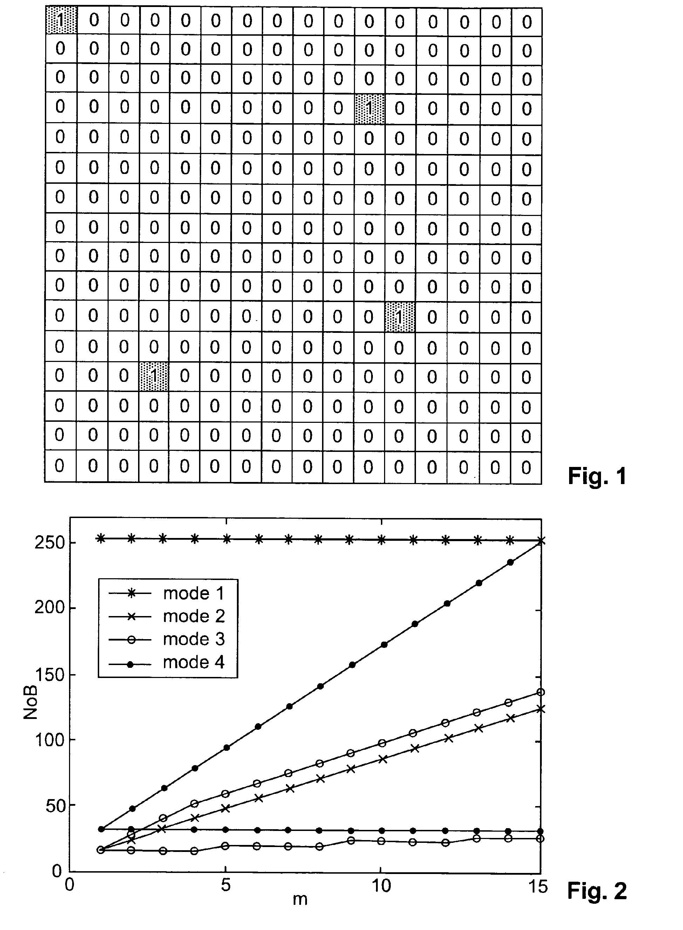

However, the significance distribution of the sparse image signal is multifarious. Although the quartation processing is a good choice for recording the locations of significant coefficients in a sparse matrix, it is not optimum in all cases. For example, for an 16*16 square as shown in Fig. 1, the number of bits to be encoded is 52 when the above quartation processing is employed, while the number of bits to be encoded is merely 40 if another processing is employed for encoding the number and the coordinates of the four significant coefficients, as shown below. The values '1' do not refer to the amplitude and location of a non-zero coefficient but only to the location of a non-zero coefficient.

Quartation processing (52 bits):

| | | | | |
|---|---|---|---|---|
| 1st level : | 1 | 1 | 1 | 1 |
| 2nd level: | 1 0 0 0 | 1 0 0 0 | 0 0 1 0 | 1 0 0 0 |
| 3rd level: | 1000 | 0001 | 0100 | 0001 |
| 4th level: | 1000 | 0010 | 0100 | 0100 |

Encoding the number and the coordinates (40 bits or less):
Encode the integer number of significant coefficients by fixed-length coding as a binary number 00000100. Fewer bits are required if Exp-Golomb Code is used. For example, when zero-order Exp-Golomb code is used the integer '4' is encoded as 00101 and only 5 instead of 8 bits are required. Encode the x-y-coordinates as binary numbers:

(0000 0000) (1010 0011) (0011 1100) (1011 1010)

A problem to be solved by the invention is to provide an improved way of recording or encoding various coefficient significance distributions. This problem is solved by the methods disclosed in claims 1 and 3. Apparatuses that utilise these method are disclosed in claims 2 and 4, respectively.

The invention is related to entropy encoding/decoding of a group of data of image/video signals. Because a single mode of pattern information encoding cannot be optimum for the different significance distributions, the invention uses several pattern determination or encoding modes for encoding a square in the above sense, and the encoding side selects one of these modes and transfers the corresponding mode information to the decoding side for accurate decoding.

Advantageously, the cost of that side information is negligible if the square size is big enough.

In principle, the inventive encoding method is suited for encoding for video encoding the distribution of significant coefficients in a block of coefficients, wherein a non-zero amplitude coefficient is denoted a significant coefficient, said method including the steps:

- for a current coefficient block, checking at least the following distribution encoding candidate modes with respect to the resulting number of bits required for encoding the distribution of the significant coefficients in said current block:

  - sample-by-sample mode wherein the significance statuses of said coefficients are scanned in sequential order through the lines or columns of said current block;
  - point coordinates mode wherein the quantity of significant coefficients and their coordinates or locations within said current block are encoded as fixed-length binary numbers;
  - quartation mode wherein a square in which not all coefficients have amplitude zero, denoted a significant square, is recursively divided into four equal-size squares until single significant coefficients are reached, and the resulting significance statuses of all generated squares are encoded;
  - sixteen-partition mode wherein a significant square is recursively divided into sixteen equal-size squares until single significant coefficients are reached, and the resulting significance statuses of all generated squares are encoded corresponding to the encoding in said quartation mode;
  - selecting for said current block that one of these candidate modes which results in the minimum number of bits required for encoding the distribution of the significant coefficients;
  - in said video encoding, using for said current block said selected mode, wherein a key word or number corresponding to said selected mode is included for said current block in the bit stream output from said video encoding.

In principle the inventive encoding apparatus is suited for encoding for video encoding the distribution of significant coefficients in a block of coefficients, wherein a non-zero amplitude coefficient is denoted a significant coefficient, said apparatus including:

- means being adapted for checking, for a current coefficient block, at least the following distribution encoding candidate modes with respect to the resulting number of bits required for encoding the distribution of the significant coefficients in said current block:

  - sample-by-sample mode wherein the significance statuses of said coefficients are scanned in sequential order through the lines or columns of said current block;
  - point coordinates mode wherein the quantity of significant coefficients and their coordinates or locations within said current block are encoded as fixed-length binary numbers;
  - quartation mode wherein a square in which not all coefficients have amplitude zero, denoted a significant square, is recursively divided into four equal-size squares until single significant coefficients are reached, and the resulting significance statuses of all generated squares are encoded;
  - sixteen-partition mode wherein a significant square is recursively divided into sixteen equal-size squares until single significant coefficients are reached, and the resulting significance statuses of all generated squares are encoded corresponding to the encoding in said quartation mode,

  and for selecting for said current block that one of these candidate modes which results in the minimum number of bits required for encoding the distribution of the significant coefficients;

  - video encoding means which use for the encoding of said current block said selected mode, wherein a key word or number corresponding to said selected mode is included for said current block in the bit stream output from said video encoding means.

In principle, the inventive decoding method is suited for decoding for video decoding the distribution of significant coefficients in a block of coefficients, wherein a non-zero amplitude coefficient is denoted a significant coefficient, said method including the steps:

- for a current coefficient block, evaluating a key word or number in a received encoded video bit stream, which key word or number represents a selected mode of how the distribution of said significant coefficients in said current coefficient block was encoded in a video encoding;
- establishing for said current block the positions of said significant coefficients according to the selected mode:

- in a sample-by-sample mode, determining the positions of said significant coefficients by evaluating received scan data representing a sequential order through the lines or columns of said current block;
- in a point coordinates mode, determining the positions of said significant coefficients by evaluating received block coordinates that were encoded as fixed-length binary numbers;
- in a quartation mode, determining the positions of said significant coefficients by evaluating received significance statuses of squares, wherein a square in which not all original coefficients had amplitude zero, denoted a significant square, was recursively divided into four equal-size squares until single significant coefficients were reached;
- in a sixteen-partition mode, determining the positions of said significant coefficients by evaluating received significance statuses of squares, wherein a square in which not all original coefficients had amplitude zero, denoted a significant square, was recursively divided into sixteen equal-size squares until single significant coefficients were reached;
- for said video decoding, filling said current block with zero amplitude coefficients at the locations where no significant coefficient is present.

In principle the inventive decoding apparatus is suited for decoding for video decoding the distribution of significant coefficients in a block of coefficients, wherein a non-zero amplitude coefficient is denoted a significant coefficient, said apparatus including:

- means being adapted for evaluating for a current coefficient block a key word or number in a received encoded video bit stream, which key word or number represents a selected mode of how the distribution of said significant coefficients in said current coefficient block was encoded in a video encoding,

and for establishing for said current block the positions of said significant coefficients according to the selected mode:

- in a sample-by-sample mode, determining the positions of said significant coefficients by evaluating received scan data representing a sequential order through the lines or columns of said current block;
- in a point coordinates mode, determining the positions of said significant coefficients by evaluating received block coordinates that were encoded as fixed-length binary numbers;
- in a quartation mode, determining the positions of said significant coefficients by evaluating received significance statuses of squares, wherein a square in which not all original coefficients had amplitude zero, denoted a significant square, was recursively divided into four equal-size squares until single significant coefficients were reached;
- in a sixteen-partition mode, determining the positions of said significant coefficients by evaluating received significance statuses of squares, wherein a square in which not all original coefficients had amplitude zero, denoted a significant square, was recursively divided into sixteen equal-size squares until single significant coefficients were reached;
- means being adapted for filling, for said video decoding, said current block with zero amplitude coefficients at the locations where no significant coefficient is present.

Advantageous additional embodiments of the invention are disclosed in the respective dependent claims.

Drawings

Exemplary embodiments of the invention are described with reference to the accompanying drawings, which show in:

Fig. 1    in a 16*16 coefficient block, example distribution of few 'significant' transformed and quantised coefficients;
Fig. 2    in a 16*16 coefficient block having few significant coefficients only, the number of bits to be encoded versus the number of significant coefficients;
Fig. 3    in a 16*16 coefficient block having a significant number of significant coefficients, the number of bits to be encoded versus the number of significant coefficients;
Fig. 4    in a 16*16 coefficient block, example distribution of a significant number of 'significant' transformed and quantised coefficients;
Fig. 5    example of an inventive encoder;
Fig. 6    example of an inventive decoder.

<u>Exemplary embodiments</u>

According to the invention, multiple modes for determining/recording/encoding the locations of significant coefficients are used in order to adapt to various significant-coefficients distribution patterns. At least the following four modes are checked or analysed. It is assumed that the block size is $2^N*2^N$, $N$=4, and that there are $m$ ($m$>0) significant coefficients in a block.

*Mode 1: sample-by-sample*

This is the less sophisticated mode. The significance statuses of the coefficients are scanned following a fixed 1-dimensional sequential order through the lines (or columns, this choice is known to the decoder) of a block. The number of bits to be encoded (denoted *NoB*) for the block is $2^{2N}$, i.e. is 256 for a 16*16 block.

*Mode 2: point coordinates*

The number of the significant coefficients and their coordinates or locations within the block are encoded as fixed-length binary numbers, cf. the 40-bits example given above. The *NoB* is a linear function with $m$, i.e. $NoB = m*2N + 2N$. The second term $2N$ of the sum means the maximum number of bits required for representing the number of significant coefficients in the block. Selecting this mode is optimal when the number of significant coefficients in the block is small.

*Mode 3: quartation*

This mode corresponds to the above-described quartation processing. A significant square (i.e. a square wherein not all coefficients have amplitude zero) is recursively divided into four equal-size squares by evenly dividing its height and its width, until single significant coefficients are reached. Thereafter the resulting significance statuses of all generated squares are encoded. Selecting this mode is optimal when the distribution of the significant coefficients in the block is relatively concentrated.

*Mode 4: sixteen-partition*

A significant square is recursively divided into sixteen equal-size squares by evenly dividing its height and its width, until single significant coefficients are reached. Thereafter the resulting significance statuses of all generated squares are encoded according to the above-described quartation processing encoding principle. This mode is similar to mode 3 and is selected when the distribution of the significant coefficients is relatively dispersed.

Fig. 2 illustrates for a 16*16 block the *NoB* versus value $m$ ($m$ is the number of significant quantised coefficients in a block) for the modes 1 to 4 for a small number of $m$, i.e.

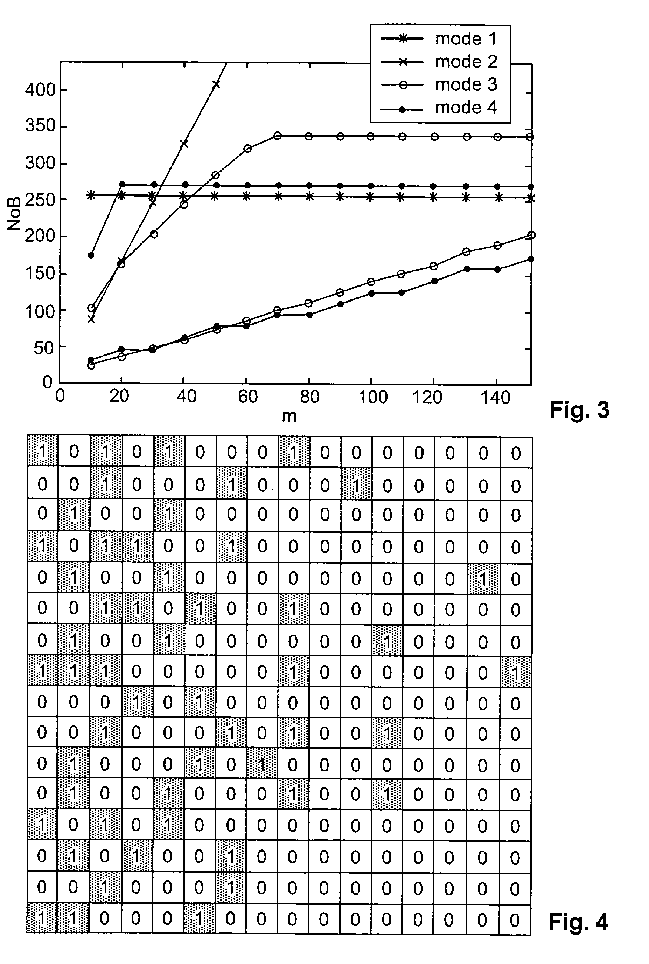

Fig. 2 is an enlarged version of the lower left edge of Fig. 3. For modes 3 and 4, the maximum possible *NoB* as well as the minimum possible *NoB* are depicted. Fig. 2 shows that mode 2 (the point coordinates mode) and mode 3 (quartation mode) have superior performance if the number of significant coefficients is very small, while modes 1 and 4 have a gradually better performance with increasing number of significant coefficients per block, as shown in Fig. 3.

It is an encoding issue to decide which mode to be used for a coefficient block. In order to achieve the highest compression efficiency, the best one of these modes can be selected by determining at encoding side for each coefficient block of the video signal to be encoded the corresponding encoding cost (i.e. the resulting bit rate) per candidate mode, and selecting for the current block the candidate mode that produces the minimum cost, i.e. by carrying out a 2-pass encoding.
Alternatively, for 1-pass encoding, the mode can be selected according to the characteristics of the coefficient significance distribution of the current block, e.g. by comparing the number of significant coefficients with a first threshold value, and by checking whether there are squares within the block that have no significant coefficients or a number of coefficients smaller than a second threshold value.
For accurate decoding, two bits (in case of no more than four candidate modes) are sent in the bit stream to indicate the mode to be used for the current block, whereby the cost of that side information is negligible if the block size is big enough.

As a further example, Fig. 4 shows a 16*16 block containing 52 significant coefficients. Most of them are located in the left half of the block. The *NoB* required for the above four modes are:

  256 (mode 1, sample-by-sample),
  424 (mode 2, point coordinate),

228 (mode 3, quartation),
208 (mode 4, sixteen partition).

Therefore, the encoder should select the sixteen partition mode 4 as the optimum mode for encoding this block. As mentioned above, two more bits are required for signalling the mode to the decoding side.

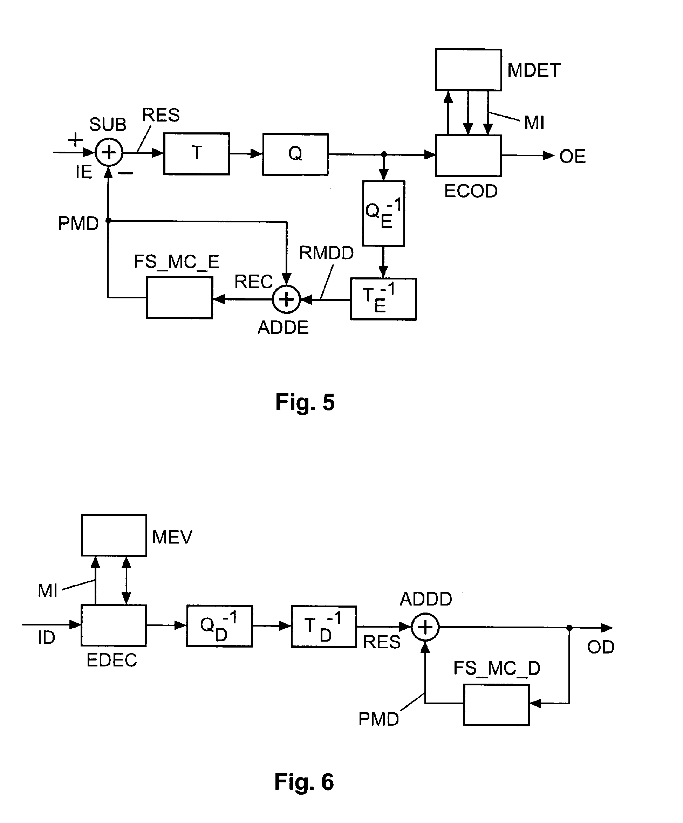

The video data input signal IE of the encoder in Fig. 5 includes pixel data for e.g. macroblocks. The pictures are processed e.g. in a manner corresponding to the MPEG2 Video or the MPEG4 AVC standard, but additionally with use of the inventive mode feature. In the case of intra (i.e. intraframe or intra-field) video data to be encoded, a subtractor SUB simply allows these to pass for a processing in transform means T and quantising means Q and entropy encoder step or stage ECOD, which outputs the encoder output signal OE. ECOD can, for example, carry out Huffman coding for the transformed and quantised coefficients, and add header information and motion vector data for its output bit stream OE. The entropy encoder step/stage ECOD provides a mode determining step/stage MDET with current coefficient block data, or with the pattern (i.e. the locations) of significant coefficients. In case MDET receives 'original' coefficient block data, it calculates therefrom the pattern (i.e. the locations) of significant coefficients. Mode determining step/stage MDET determines, as described above, one of modes 1 to 4 to be applied in the encoding of that current block in entropy encoder ECOD. The corresponding mode information MI and the corresponding significant coefficient location information are used in step/stage ECOD for the output signal encoding and are attached to the output bit stream OE. The quantising means Q and the inverse quantising means $Q_E^{-1}$ can be controlled by the occupancy level of the encoder buffer ENCB. In the case of non-intra video data, predicted block or macroblock data PMD are subtracted from the input signal IE in the subtractor SUB and the difference data RES are fed to the entropy encoder ECOD via the transform means/stage/ step T and the quantising means/stage/step Q. The output signal of Q is also processed in inverse quantising means/ stage/ step $Q_E^{-1}$, the output signal of which is fed via inverse transform means/stage/step $T_E^{-1}$ to the combiner step/ stage ADDE in the form of reconstructed block or macroblock difference data RMDD. The output signal of ADDE is buffer-stored in a frame store in motion estimation and compensation means/stage/step FS_MC_E, which carry out motion compensation for reconstructed block or macroblock data and output block or predicted macroblock data PMD to the subtracting input of SUB and to the other input of the combiner ADDE.

In Fig. 6, encoded pixel data of the encoded video data input signal ID is fed via entropy decoder means/stage/ step EDEC, inverse quantising means $Q_D^{-1}$ and inverse transform means $T_D^{-1}$ (in case of non-intra data as residual frame data RES) to a combiner step/stage ADDD, which outputs the reconstructed pixel data output signal OD. In case of intra block or macroblock data the output of $T_D^{-1}$ simply passes ADDD, i.e. $T_D^{-1}$ outputs OD. The pictures are processed e.g. in a manner corresponding to the MPEG2 Video or the MPEG4 AVC standard, respectively, but additionally with use of the inventive mode feature. EDEC decodes and/or evaluates header information and motion vector data and can carry out Huffman decoding for the coefficients. Entropy decoder step or stage EDEC extracts the mode information MI (i.e. evaluates a corresponding key word or number) from the received bit stream ID and feeds it to a mode evaluator step or stage MEV that provides the reconstructed significant coefficient locations of the current block to step/stage EDEC (or directly to quantising means/stage/step $Q_D^{-1}$ or inverse transform means/stage/step $T_D^{-1}$).
For the current block the positions of the significant coefficients are established according to the selected mode:

- in the sample-by-sample mode, the positions of the significant coefficients are determined by evaluating the received scan data representing a sequential order through the lines or columns of the current block;
- in the point coordinates mode, the positions of the significant coefficients are determined by evaluating the received block coordinates that were encoded as fixed-length binary numbers;
- in the quartation mode, the positions of the significant coefficients are determined by evaluating the received significance statuses of squares, wherein a square in which not all original coefficients had amplitude zero, denoted a significant square, was recursively divided into four equal-size squares until single significant coefficients were reached;
- in the sixteen-partition mode, the positions of the significant coefficients are determined by evaluating the received significance statuses of squares, wherein a square in which not all original coefficients had amplitude zero, denoted a significant square, was recursively divided into sixteen equal-size squares until single significant coefficients were reached.

For the video decoding, the current block is filled with zero amplitude coefficients at the locations where no significant coefficient is present. Such filling is carried out in MEV, EDEC, $Q_D^{-1}$ or $T_D^{-1}$. The corresponding coefficient block as output from the quantiser step/stage Q at encoding side is reconstructed before entering the inverse transform means/stage/step $T_D^{-1}$.
In case of non-intra block or macroblock data, the output signal of ADDD is buffer-stored in a frame store in motion compensation means/stage/step FS_MC_D, which effect a motion compensation for reconstructed block or macroblock data. The block or macroblock data PMD predicted in FS_MC_D are passed to the second input of the combiner ADDD.

In Fig. 5 and 6, $Q_E^{-1}$, $Q_D^{-1}$, $T_E^{-1}$, $T_D^{-1}$ and EDEC have a function which is the corresponding inverse of the function of Q, T and ECOD, respectively.

In practice, the inventive coding processing for locations of significant signals can be applied to block sizes that are much bigger than 16*16. For example, in wavelet based coding/decoding, the size of the first level of LH, HL, and HH subbands of a 512*512 image is as big as 256*256. The overhead for mode indication is only 2 bits, which is quite negligible when compared with the total amount of entropy-coded bits of such subband.

Another example of using this invention in DCT based coding/ decoding is to treat all the quantised transformed coefficients in one frame (or in a part of a frame, e.g. a slice or a 64*64 block) as a whole, and to encode the locations of significant coefficients in the whole map by the above-described processing. This processing can be used not only for a still image, but also for I frames, P frames and B frames of a video sequence. The corresponding side information is only two or only a few bits (if more modes are included) for one frame.

The inventive processing is not limited to square blocks. Any signal format (1-dimensional, 2-dimensional, or multidimensional signals) can be shaped into the proper format and is thereafter adaptively encoded using the inventive processing.

For non-square blocks, or where the width *W* or height *H* is not a power of '2', there are a several ways to use the invention. For example, for 720*576 pixels active picture size, when the quartation method is used, the following calculation can be carried out during the division:

$$W' = \text{floor}(W/2), \text{ and } H' = \text{floor}(H/2)$$

This means that the block is divided into [1, ..., *W*] [*W'*+1, ..., *W*] in its width, and is divided into [1, ..., *H'*] [*H'*+1, ..., *H*] in its height. Accordingly, the quartation processing can be continued recursively, wherein the recursion is stopped when *W*==2 or *H*==2.
This means that the smallest unit is 2**N*, or *N**2. For the smallest unit, a sample-by-sample processing is used.
A similar procedure can be applied in the sixteen-partition mode.
In another embodiment for 720*576 pixels picture size, regular quartation or sixteen-partition processings are used for part of the image, for instance 16*16 or 256*256, and the whole image is separated into several ones of this basis unit. For the remaining part of the image, i.e. the pixels or macroblocks located at the edge of the image, the sample-by-sample mode can be used.

Furthermore, combination of quartation method and sixteen partition method can also be used. For example, the first several levels of recursion use quartation method, while the final level uses sixteen-partition method.

The invention is not limited to the four modes described above. Nine-partition or $N^2$-partition (*N* being an integer greater than '4') according to the principle of the above-described 16-partition, as well as zigzag scan with run-length coding can be used as optional modes.

The described adaptive (entropy) encoding of locations of significant values of sparse signals can also be used for audio coding or mesh data coding, and applied to signals following prediction, DCT/wavelet transform, and/or quantisation.

**Claims**

1. Method for encoding for video encoding (SUB, T, Q, $Q_E^{-1}$, $T_E^{-1}$, ADDE, FS_MC_E, ECOD) the distribution of significant coefficients (1) in a block of coefficients, wherein a non-zero amplitude coefficient is denoted a significant coefficient, said method including the steps:

- for a current coefficient block, checking (MDET) at least the following distribution encoding candidate modes with respect to the resulting number of bits required for encoding (ECOD) the distribution of the significant coefficients in said current block:

- sample-by-sample mode wherein the significance statuses of said coefficients are scanned in sequential order through the lines or columns of said current block;
- point coordinates mode wherein the quantity of significant coefficients and their coordinates or locations within said current block are encoded as fixed-length binary numbers;
- quartation mode wherein a square in which not all coefficients have amplitude zero, denoted a significant square, is recursively divided into four equal-size squares until single significant coefficients are reached, and the resulting significance statuses of all generated squares are encoded;

- sixteen-partition mode wherein a significant square is recursively divided into sixteen equal-size squares until single significant coefficients are reached, and the resulting significance statuses of all generated squares are encoded corresponding to the encoding in said quartation mode;
- selecting (MDET) for said current block that one of these candidate modes which results in the minimum number of bits required for encoding the distribution of the significant coefficients;
- in said video encoding, using for said current block said selected mode, wherein a key word or number (MI) corresponding to said selected mode is included for said current block in the bit stream (OE) output from said video encoding.

2. Apparatus for encoding for video encoding the distribution of significant coefficients (1) in a block of coefficients, wherein a non-zero amplitude coefficient is denoted a significant coefficient, said apparatus including:

- means (MDET) being adapted for checking, for a current coefficient block, at least the following distribution encoding candidate modes with respect to the resulting number of bits required for encoding (ECOD) the distribution of the significant coefficients in said current block:

- sample-by-sample mode wherein the significance statuses of said coefficients are scanned in sequential order through the lines or columns of said current block;
- point coordinates mode wherein the quantity of significant coefficients and their coordinates or locations within said current block are encoded as fixed-length binary numbers;
- quartation mode wherein a square in which not all coefficients have amplitude zero, denoted a significant square, is recursively divided into four equal-size squares until single significant coefficients are reached, and the resulting significance statuses of all generated squares are encoded;
- sixteen-partition mode wherein a significant square is recursively divided into sixteen equal-size squares until single significant coefficients are reached, and the resulting significance statuses of all generated squares are encoded corresponding to the encoding in said quartation mode,
and for selecting for said current block that one of these candidate modes which results in the minimum number of bits required for encoding the distribution of the significant coefficients;
- video encoding means (SUB, T, Q, $Q_E^{-1}$, $T_E^{-1}$, ADDE, FS_MC_E, ECOD) which use for the encoding of said current block said selected mode, wherein a key word or number (MI) corresponding to said selected mode is included for said current block in the bit stream (OE) output from said video encoding means.

3. Method for decoding for video decoding (SUB, T, Q, $Q_E^{-1}$, $T_E^{-1}$, ADDE, FS_MC_E, ECOD) the distribution of significant coefficients (1) in a block of coefficients, wherein a non-zero amplitude coefficient is denoted a significant coefficient, said method including the steps:

- for a current coefficient block, evaluating (MEV) a key word or number (MI) in a received encoded video bit stream (IE), which key word or number represents a selected mode of how the distribution of said significant coefficients in said current coefficient block was encoded in a video encoding;
- establishing for said current block the positions of said significant coefficients according to the selected mode:

- in a sample-by-sample mode, determining the positions of said significant coefficients by evaluating received scan data representing a sequential order through the lines or columns of said current block;
- in a point coordinates mode, determining the positions of said significant coefficients by evaluating received block coordinates that were encoded as fixed-length binary numbers;
- in a quartation mode, determining the positions of said significant coefficients by evaluating received significance statuses of squares, wherein a square in which not all original coefficients had amplitude zero, denoted a significant square, was recursively divided into four equal-size squares until single significant coefficients were reached;
- in a sixteen-partition mode, determining the positions of said significant coefficients by evaluating received significance statuses of squares, wherein a square in which not all original coefficients had amplitude zero, denoted a significant square, was recursively divided into sixteen equal-size squares until single significant coefficients were reached;
- for said video decoding, filling said current block with zero amplitude coefficients at the locations where no significant coefficient is present.

4. Apparatus for decoding for video decoding (SUB, T, Q, $Q_E^{-1}$, $_{TE}^{-1}$, ADDE, FS_MC_E, ECOD) the distribution of significant coefficients (1) in a block of coefficients, wherein a non-zero amplitude coefficient is denoted a significant coefficient, said apparatus including:

- means (MEV) being adapted for evaluating for a current coefficient block a key word or number (MI) in a received encoded video bit stream (IE), which key word or number represents a selected mode of how the distribution of said significant coefficients in said current coefficient block was encoded in a video encoding, and for establishing for said current block the positions of said significant coefficients according to the selected mode:

- in a sample-by-sample mode, determining the positions of said significant coefficients by evaluating received scan data representing a sequential order through the lines or columns of said current block;

- in a point coordinates mode, determining the positions of said significant coefficients by evaluating received block coordinates that were encoded as fixed-length binary numbers;

- in a quartation mode, determining the positions of said significant coefficients by evaluating received significance statuses of squares, wherein a square in which not all original coefficients had amplitude zero, denoted a significant square, was recursively divided into four equal-size squares until single significant coefficients were reached;

- in a sixteen-partition mode, determining the positions of said significant coefficients by evaluating received significance statuses of squares, wherein a square in which not all original coefficients had amplitude zero, denoted a significant square, was recursively divided into sixteen equal-size squares until single significant coefficients were reached;

- means being adapted for filling, for said video decoding, said current block with zero amplitude coefficients at the locations where no significant coefficient is present.

5. Method according to claim 1 or 3, or apparatus according to claim 2 or 4, wherein said block of coefficients has a size of 16*16.

6. Method according to claim 1, 3 or 5, or apparatus according to claim 2, 4 or 5, wherein in said quartation mode said resulting significance statuses of all generated squares are encoded, or decoded, respectively, using an Exp-Golomb code.

7. Method according to one of claims 1, 3, 5 and 6, or apparatus according to one of claims 2 and 4 to 6, wherein at least one of a nine-partition mode, an $N^2$-partition mode and/or a zigzag-scan mode is further used in said mode checking or decoding, respectively.

8. Method according to one of claims 1, 3 and 5 to 7, or apparatus according to one of claims 2 and 4 to 7, wherein said point coordinates mode or said quartation mode is selected in case the number of significant coefficients in said current block is small.

9. Digital video signal that is encoded according to the method of one of claims 1 and 5 to 8.

10. Storage medium, for example an optical disc, that contains or stores, or has recorded on it, a digital video signal according to claim 9.

**Fig. 1**

**Fig. 2**

Fig. 3

Fig. 4

SUB RES

$+$

IE $-$

T

Q

PMD

$Q_E^{-1}$

MDET

MI

OE

ECOD

FS_MC_E

REC

RMDD

$T_E^{-1}$

ADDE

**Fig. 5**

MEV

MI

ID

EDEC

$Q_D^{-1}$

$T_D^{-1}$

RES

ADDD

$+$

OD

FS_MC_D

PMD

**Fig. 6**

**Europäisches Patentamt**
**European Patent Office**
**Office européen des brevets**

## EUROPEAN SEARCH REPORT

Application Number

EP 08 30 5483

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| D,A | US 2007/071331 A1 (LIU XITENG [US]) 29 March 2007 (2007-03-29) * abstract * * paragraphs [0002], [0004], [0005], [0013], [0014] * | 1-10 | INV. H04N7/26 H04N7/50 |
| A | LEE J H ET AL: "An Efficient Encoding of DCT Blocks with Block-Adaptive Scanning" IEICE TRANSACTIONS ON COMMUNICATIONS, vol. E77-B, no. 12, December 1994 (1994-12), pages 1489-1494, XP000498064 COMMUNICATIONS SOCIETY, Tokyo, JP ISSN: 0916-8516 * the whole document * | 1-10 | |
| A | US 2007/047656 A1 (KIM SO-YOUNG [KR] ET AL) 1 March 2007 (2007-03-01) * paragraphs [0090] - [0095] * * figure 10 * | 1-10 | |
| A | PARK S C ET AL: "An Efficient Algorithm for Sparse Matrix Computations" PROCEEDINGS OF THE 1990 ACM/SIGAPP ON APPLIED COMPUTING, January 1992 (1992-01), pages 919-926, XP002454812 * page 920, left-hand column, line 1 - page 921, left-hand column, line 13 * | 1-10 | TECHNICAL FIELDS SEARCHED (IPC) H04N |

-/--

The present search report has been drawn up for all claims

| Place of search | Date of completion of the search | Examiner |
|---|---|---|
| Berlin | 29 May 2009 | Sampels, Michael |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 08 30 5483

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | TEUHOLA J: "A compression method for clustered bit-vectors" INFORMATION PROCESSING LETTERS, vol. 7, no. 6, October 1978 (1978-10), pages 308-311, XP001000934 Amsterdam, NL ISSN: 0020-0190 * page 308, right-hand column, line 26 - page 309, right-hand column, line 5 * * page 311, left-hand column, line 1 - last line * * figures 1,2 * * table 1 * | 6 | |
| A | EP 0 827 345 A (MITSUBISHI ELECTRIC CORP [JP]) 4 March 1998 (1998-03-04) * abstract * * column 3, line 9 - line 25 * * column 4, line 4 - line 14 * * column 11, last line - column 12, line 12 * * figures 2,3 * | 7 | |
| T | HURLEY ET AL: "Comparing measures of sparsity" PROCEEDINGS OF THE 2008 IEEE WORKSHOP ON MACHINE LEARNING FOR SIGNAL PROCESSING (MLSP 2008), 16 October 2008 (2008-10-16), pages 55-60, XP031365164 IEEE, Piscataway, NJ, USA ISBN: 978-1-4244-2375-0 * the whole document * | 8 | TECHNICAL FIELDS SEARCHED (IPC) |

The present search report has been drawn up for all claims

| Place of search | Date of completion of the search | Examiner |
|---|---|---|
| Berlin | 29 May 2009 | Sampels, Michael |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 08 30 5483

This annex lists the patent family members relating to the patent documents cited in the above-mentioned European search report.
The members are as contained in the European Patent Office EDP file on
The European Patent Office is in no way liable for these particulars which are merely given for the purpose of information.

29-05-2009

| Patent document cited in search report | | Publication date | Patent family member(s) | | Publication date |
|---|---|---|---|---|---|
| US 2007071331 | A1 | 29-03-2007 | NONE | | |
| US 2007047656 | A1 | 01-03-2007 | CN | 1921630 A | 28-02-2007 |
| | | | EP | 1804516 A1 | 04-07-2007 |
| | | | KR | 20070026914 A | 09-03-2007 |
| EP 0827345 | A | 04-03-1998 | JP | 8256266 A | 01-10-1996 |
| | | | US | 5926574 A | 20-07-1999 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070071331 A1

**Non-patent literature cited in the description**

- **D. Taubman.** High Performance Scalable Image Compression with EBCOT. *IEEE Transactions on Image Processing,* July 2000, vol. 9 (7), 1158-1170